# EUROPEAN PATENT APPLICATION

(11) **EP 4 134 344 A1**
(43) Date of publication of application: **15.02.2023**
(21) Application number: 21398013.9
(22) Date of filing: 13.08.2021
(51) Int. Cl.: B65G 69/20, F26B 3/20, C10B 31/00, C10B 57/10

(54) **SYSTEM FOR THE TRANSPORTATION OF BIOMASS WITH AN INTEGRATED CONDENSATION MODULE**

(71) Applicant: Secil-Companhia Geral de Cal e Cimento S.A., 1070-100 Lisboa (PT)
(72) Inventor: Pires dos Santos Mateus, Maria Margarida, 2720-428 Damaia (PT); Santos Ferreira, Luis Filipe dos, 2500-329 Caldas da Rainha (PT)
(74) Representative: do Nascimento Gomes, Rui

(57) **Abstract**

It is intended with the present invention to obtain an innovative solution for biomass transport systems. In particular, the invention relates to the integration of a conveyor module (2) and a condenser module (3), in such a way that, structurally, the proposed transportation system (1) ensures the execution of the heating/drying process of the biomass to be transported before it enters the reaction vessel.

## Description

### FIELD OF THE INVENTION

The present invention falls within the field of biomass transport systems and biomass processing systems.

### BACKGROUND OF THE INVENTION

The current market comprises various types of conveyor modules, including Redler-type chain conveyors, which are equipment used for transporting bulk products. These are self-cleaning machines, which use special types of trough-shaped dragging blades and transport the whole bulk without increasing the percentage of fines. They operate both in horizontal and tilted planes, with continuous flow, and are characterized by their low power consumption and the reduced space occupied by them. Generally speaking, the conveyor modules receive the product to be transported at defined loading points and their unloading can be installed at any intermediate part or at one end of the module.

There is currently an increasing interest in renewable raw materials for the manufacture of biofuels and value-added products, so the conveyor modules are also used for the transportation of bulk biomass, leading it to a reaction vessel where the reaction will occur. In this scenario, the conveyor module is integrated into a more complex biomass processing system, which includes, in addition to the reaction vessel, a condenser module to convert the vapours generated by the reaction into a liquid composed of water and solvent.

However, it is noted that the biomass to be transported in the conveyor module must undergo a heating/drying process before entering the reaction vessel, which requires that the biomass is heated in order to reduce its moisture content, thus allowing a positive and direct influence on the reaction temperature in the reaction vessel. Typically, the biomass heating/drying process is implemented by independent dryer modules, which use the reaction vapours to heat the biomass to be transported by the conveyor modules. The introduction of additional modules makes biomass processing systems unnecessarily more complex and bulky, with all the disadvantages this entails, in terms of occupied space, operation control, consumption and maintenance.

### TECHNICAL PROBLEM TO BE SOLVED

In light of the aforementioned, the need arises to optimise the state-of-the-art biomass processing systems and achieve a solution that is globally simpler and more compact, but which is equally effective.

The invention aims to solve this problem by means of a new biomass transport system which proposes integration between the conveyor module and the condenser module. This structural rearrangement ensures that the biomass heating/drying process takes place in the conveyor module without the need for additional modules.

### SUMMARY OF THE INVENTION

It is intended with the present invention to obtain an innovative solution for biomass transport systems. In particular, the invention relates to the integration of a conveyor module and a condenser module, in such a way that, structurally, the proposed transportation system ensures the execution of the heating/drying process of the biomass to be transported before it enters the reaction vessel.

A first object of the present invention is therefore a system for transporting biomass with an integrated condenser module. This solution thus provides for the biomass heating/drying process being effectively implemented by means of a simple and compact system. For this purpose, the system of the invention is comprised of:
- A conveyor module adapted for transporting biomass to a reaction vessel; and
- A condenser module configured to transform the reaction vapours generated in the reaction vessel into a reaction mixture in the liquid state.

Additionally, the condenser module is also adapted to capture the reaction vapours, being arranged in relation to the conveyor module in such a way as to enable the transfer of thermal energy from the reaction vapours captured by it to the biomass to be transported in the conveyor module.

As such, the invention corresponds to a structural rearrangement between modules which are typically employed in biomass processing systems, in particular the conveyor module and the condenser module.

It is also an object of the present invention, a biomass processing system comprising the system for transporting biomass which represents the first object of the invention, and a reaction vessel.

### DESCRIPTION OF THE FIGURES

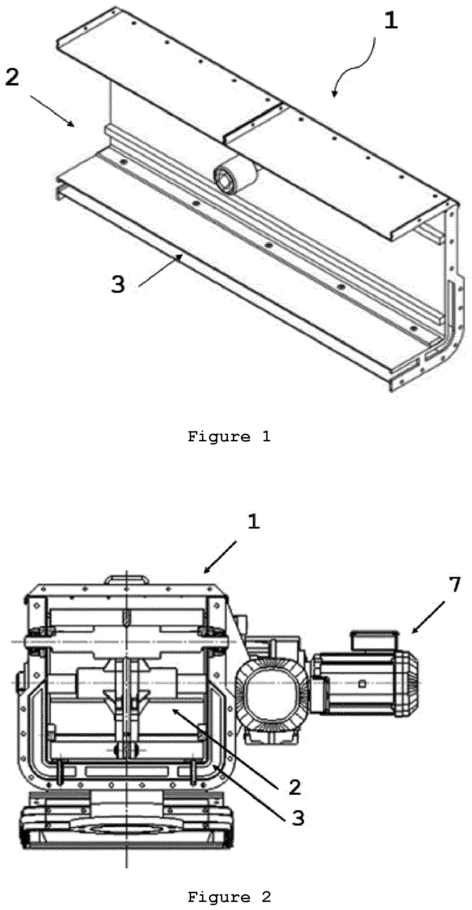

Figure 1 - representation of an embodiment of the transportation system of the invention, in longitudinal section view of said system. The numerical reference signs mean the following:
   1 - transportation system;
   2 - conveyor module;
   3 - condenser module.
Figure 2 - representation of an embodiment of the transportation system of the invention, in cross-sectional view. The reference numerical signs mean the following:
   1 - transportation system;
   2 - conveyor module;
   3 - condenser module;
   7 - motor reducer.

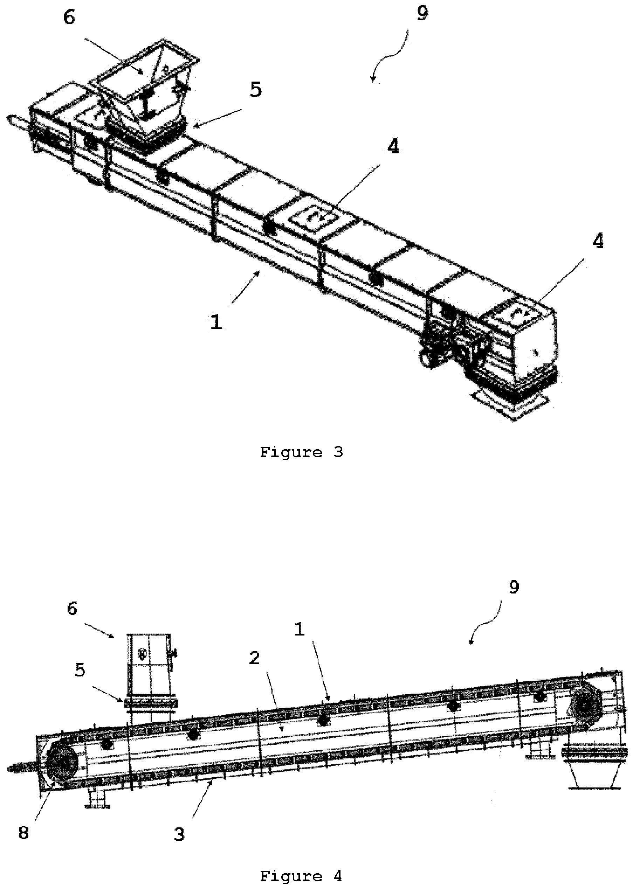

Figure 3 - top view representation of an embodiment of a biomass processing system including the transportation system of the invention. The numerical reference signs mean the following:
   1 - transportation system;
   4 - loading section;
   5 - outlet section;
   6 - reaction vessel;
   9 - biomass processing system.
Figure 4 - representation of an embodiment of a biomass processing system including the transportation system of the invention, in longitudinal section view. The numerical reference signs mean the following:
   1 - transportation system;
   2 - conveyor module;
   3 - condenser module;
   5 - outlet section;
   6 - reaction vessel;
   8 - drag chains;
   9 - biomass processing system.

### DETAILED DESCRIPTION OF THE INVENTION

The most general advantageous configurations of the present invention are described in the Summary of the invention. These configurations are detailed below, according to other advantageous and/or preferred embodiments of the present invention.

In a preferred embodiment of the system (1) of the invention, the condenser module (3) is a closed structure defining a chamber arranged to encase at least a part of the conveyor module (2). Said closed structure is formed by an inlet section adapted to capture the reaction vapours generated in the reaction vessel (6) and by an outlet section making the reaction mixture available in the liquid state.

In another preferred embodiment of the system (1) of the invention, the conveyor module (2) comprises a transport structure formed by a loading section (4) and an outlet section (5), a transportation area being defined between the loading section (4) and the outlet section (5).

Still in a preferred embodiment of the system (1) of the invention, the condenser module (3) is arranged so as to encase the conveyor module (2) along at least a part of the transportation area.

Still in a preferred embodiment of the system (1) of the invention, the material constituting the closed structure of the condenser module (3) and the transport structure of the conveyor module (2) is adapted to enable the transfer of thermal energy from the reaction vapours to the biomass in the transportation area. For example, 316-L stainless steel or 316 stainless steel may be used for the desired effect.

Still in a preferred embodiment of the system (1) of the invention, the closed structure of the condenser module (3) is in double wall. This improves the thermal insulation as regards the external space of the condenser module (3), which favours the heating/drying process of the biomass to be transported.

Also in a preferred embodiment of the system (1) of the invention, the transport structure of the conveyor module (2) is a closed structure encompassing at least a part of the transportation area. In this way it is possible to keep the smaller biomass particles inside said structure during transport, thereby facilitating dust control. In addition, it also allows the flow rate of biomass to be delivered to the reaction vessel (6) to be constant.

Still in a preferred embodiment of the system (1) of the invention, the closed structure of the conveyor module (2) is in metal.

Still in a preferred embodiment of the system (1) of the invention, the condenser module (3) is arranged so as to encase the closed structure of the conveyor module (2).

Still in a preferred embodiment of the system (1) of the invention, the outlet section (5) of the conveyor module (2) can be set anywhere in the transport structure of said conveyor module (2), which makes the system modular and adaptable to different practical scenarios.

Still in a preferred embodiment of the system (1) of the invention, the outlet section (5) of the conveyor module (2) is adapted for direct coupling to a reaction vessel (6).

Also in a preferred embodiment of the system (1) of the invention, the displacement of the reaction vapours captured by the condenser module (3) is done in countercurrent in relation to the biomass to be transported by the conveyor module (2). This is a direct result of the structural rearrangement implemented.

Also in a preferred embodiment of the system (1) of the invention, the conveyor module (2) is a chain conveyor of the Redler type.

Still in a further preferred embodiment of the system (1) of the invention, the biomass to be transported by the conveyor module (2) is of lignocellulosic origin or refuse-derived fuels.

As will be evident to a person skilled in the art, the present invention should not be limited to the embodiments described herein, with a number of changes being possible, which remain within the scope of this invention.

Of course, the preferred embodiments above described are combinable in the different possible forms, the repetition of all such combinations being herein avoided.

## Claims

1. A system for biomass transport with an integrated condenser module (1) **characterized in that** it comprises:
- A conveyor module (2) adapted for transporting biomass to a reaction vessel (6); and
- A condenser module (3) configured to transform the reaction vapours generated in the reaction vessel (6) into a reaction mixture in the liquid state;
**and**
the condenser module (3) being also adapted to capture the reaction vapours and arranged in relation to the conveyor module (2) in such a way as to enable the transfer of thermal energy from the reaction vapours captured by it to the biomass to be transported in the conveyor module (2).

2. A system (1) according to claim 1, wherein the condenser module (3) is a closed structure, defining a chamber arranged to encase at least a part of the conveyor module (2), said closed structure being comprised of an inlet section adapted to capture the reaction vapours generated in the reaction vessel (6) and of an outlet section to make the reaction mixture available.

3. A system (1) according to any of the previous claims, wherein the conveyor module (2) comprises a transport structure formed by a loading section (4) and an outlet section (5), with a transportation area being defined between the loading section (4) and the outlet section (5).

4. A system (1) according to claims 2 and 3, wherein the condenser module (3) encases the conveyor module (2) along at least a part of the transportation area.

5. A system (1) according to claims 2 and 3 or 4, wherein the material composing the closed structure of the condenser module (3) and the transport structure of the conveyor module (2) is adapted in such a way as to enable the transfer of thermal energy from the reaction vapours to the biomass in the transportation area.

6. A system (1) according to any of the claims 2 to 5, wherein the closed structure of the condenser module (3) is in double wall.

7. A system (1) according to any of claims 3 to 6, wherein the transport structure of the conveyor module (2) is a closed structure encompassing at least a part of the transportation area.

8. A system (1) according to claim 7, wherein the closed structure of the conveyor module (2) is in metal.

9. A system (1) according to claims 7 or 8, wherein the condenser module (3) is arranged so as to encase the closed structure of the conveyor module (2).

10. A system (1) according to any of the claims 3 to 9, wherein the outlet section (5) of the conveyor module (2) can be set anywhere in the transport structure of said conveyor module (2).

11. A system (1) according to any of the claims 3 to 10, wherein the outlet section (5) of the conveyor module (2) is adapted for direct coupling to a reaction vessel (6) .

12. A system (1) according to any of the previous claims, wherein the displacement of the reaction vapours captured by the condenser module (3) is done in countercurrent in relation to the biomass to be transported by the conveyor module (2).

13. A system (1) according to any of the previous claims, wherein the conveyor module (2) is a chain conveyor of the Redler type.

14. A system (1) according to any of the previous claims, wherein the biomass to be transported by the conveyor module (2) is of lignocellulosic origin or refuse-derived fuels.

15. A biomass processing system (9), comprising:
- the system for biomass transport with integrated condenser module (1) of claims 1 to 14;
- a reaction vessel (6).
